# EUROPÄISCHE PATENTSCHRIFT

(11) **EP 1 661 688 B1**
(45) Veröffentlichungstag und Bekanntmachung des Hinweises auf die Patenterteilung: **13.06.2012**
(21) Anmeldenummer: 05024771.7
(22) Anmeldetag: 12.11.2005
(51) Int. Cl.: B29C 51/10, B29C 51/16

(54) **Verfahren zur Herstellung eines gefärbten dünnwandigen formstabilen Kunststoffformkörpers**
Method for manufacturing a coloured thinwalled dimensionally stable plastic article
Procédé de production d'un corps coloré de forme stable à parois minces en plastique

(30) Priorität: 27.11.2004 DE 102004057435
(43) Veröffentlichungstag der Anmeldung: 31.05.2006
(73) Patentinhaber: Bayerische Motoren Werke Aktiengesellschaft, 80809 München (DE)
(72) Erfinder: Schwager, Hans, 85253 Erdweg (DE); Schleicher, Ludwig, 92690 Pressath (DE)
(74) Vertreter: LOUIS, PÖHLAU, LOHRENTZ

(56) Entgegenhaltungen:
- EP-A- 0 713 759
- WO-A-03/082546
- WO-A-2004/072154
- US-A- 5 958 326
- US-A1- 2002 109 256
- US-A1- 2003 030 173

## Beschreibung

Die Erfindung betrifft ein Verfahren zur Herstellung eines dünnwandigen formstabilen Kunststoffformkörpers, insbesondere mit einer strukturierten Oberfläche.

Zur Herstellung von dünnwandigen formstabilen Kunststoffformkörpern sind Schäum-, Sprüh- und Gießverfahren sowie positive und negative Tiefziehverfahren bekannt. Ein Mangel dieser bekannten Verfahren besteht darin, dass der Glanzeffekt auf der Oberfläche des hergestellten strukturierten Kunststoffformkörpers Wünsche offen lassen kann bzw. offen lässt.

Ein Verfahren zur Herstellung einer formstabilen Kunststoff-Formhaut mit genarbter Oberfläche, wobei ein Kunststoff in pulverförmiger oder flüssiger Form zur Erzeugung der Oberfläche der Formhaut auf eine Werkzeugoberfläche aufgetragen und anschließend ausgehärtet wird, ist aus der DE 102 09 941 A1 bekannt. Bei diesem bekannten Verfahren gelangt nach dem Auftragen des Oberflächenmaterials ein schlauchförmiges Trägermaterial mit dem Oberflächenmaterial in Kontakt, so dass nach deren Verbindung eine tragfähige Kunststoff-Formhaut aus dem Werkzeug entnommen werden kann. Die solchermaßen hergestellte Kunststoff-Formhaut kann auf ein Bauteil aufkaschiert oder hinterspritzt werden.

Aus der US 5 958 326 ist ein Verfahren zur Herstellung eines dünnwandigen formstabilen Kunststoffkörpers bekannt, bei dem ein folienförmiges Halbzeug in ein Formwerkzeug eingesetzt wird und unter Hltze- und Druckeinwirkung geformt wird.

Der Erfindung liegt die Aufgabe zugrunde, ein Verfahren der eingangs genannten Art zu schaffen, mit dem mit hoher Produktivität dünnwandige formstabile Kunststoffformkörper mit einer strukturierten Oberfläche, die einen optimalen Glanzeffekt aufweisen kann, herstellbar sind.

Diese Aufgabe wird erfindungsgemäß durch die Merkmale des Anspruches 1, d.h. durch die folgenden Verfahrensschritte gelöst:
a) - Erwärmen eines folienförmigen Halbzeugs,
b) - Einbringen einer Farbschicht in ein erstes Formteil eines Formwerkzeuges,
c) - Einbringen des erwärmten folienförmigen Halbzeugs zwischen das erste Formteil und ein zweites Formteil des Formwerkzeuges,
d) - Schließen des Formwerkzeuges, wobei das folienförmige Halbzeug zwischen dem ersten und dem zweiten Formteil abdichtend festgelegt wird,
e) - Erzeugen eines Unterdrucks im ersten Formteil, sodass Lufteinschlüsse aus der Farbschicht des ersten Formteils beseitigt werden und Erzeugen eines Überdruckes im zweiten Formteil, sodass das folienförmige Halbzeug an die Innenkontur des ersten Formteiles eng angelegt wird, und
f) - Abkühlen und Entlüften und Öffnen des Formwerkzeuges und Entnahme des fertigen dünnwandigen formstabilen Kunststoffformkörpers.

Das erfindungsgemäße Verfahren weist den Vorteil auf, dass mit ihm dünnwandige formstabile Kunststoffformkörper mit einer strukturierten Oberfläche einfach und mit hoher Produktivität präzise herstellbar sind, wobei sich eine der jeweiligen Farbschicht entsprechende strukturierte farbige, optimal glänzende Oberfläche des Kunststoffformkörpers ergibt. Dabei kann die Oberfläche einfarbig oder mehrfarbig sein.

Durch den Unterdruck im ersten Formteil werden Lufteinschlüsse in der Farbschicht beseitigt, so dass ein gewünschter optimaler Mehrglanzeffekt der strukturierten Oberfläche des hergestellten Kunststoffformkörpers realisierbar ist. Das heißt, es ist eine qualitativ hochwertige Oberfläche des Kunststoffformkörpers herstellbar.

Die enge Anlage des folienförmigen Halbzeugs an die Innenkontur des ersten Formteiles erfolgt mittels des an das zweite Formteil des Formwerkzeuges angelegten Überdruckes.

Als zweckmäßig hat es sich bei der Durchführung des erfindungsgemäßen Verfahrens erwiesen, wenn das Erwärmen des folienförmigen Halbzeugs in zwei Schritten erfolgt, wobei im ersten Schritt eine Erwärmung auf eine Temperatur unterhalb des plastischen Bereiches des folienförmigen Halbzeuges und im daran anschließenden zweiten Schritt eine Erwärmung auf eine Temperatur über dem plastischen Bereich des folienförmigen Halbzeuges erfolgt. Das solchermaßen vorbereitete - und gegebenenfalls mit einer Farbschicht versehene - folienförmige Halbzeug wird dann zwischen dem ersten und dem zweiten Formteil des Formwerkzeuges eingebracht, wonach das Formwerkzeug abdichtend verschlossen wird.

Als Ausgangsmaterial d.h. als folienförmiges Halbzeug kann beispielsweise eine PU- oder eine PVC-Folie verwendet werden. Selbstverständlich ist es auch möglich, alle anderen geeigneten thermoplastischen folienförmigen Halbzeuge zu verwenden.

Ein hochproduktives Verfahren ist dadurch gekennzeichnet, dass die Farbschicht in das erste Formteil des Formwerkzeuges eingesprüht und/oder auf das folienförmige Halbzeug aufgesprüht wird. Das kann manuell oder automatisch geschehen.

Für die Farbschicht kann ein Einkomponenten-Farbsystem oder ein Zweikomponenten-Farbsystem verwendet werden. Das ist von der jeweiligen Anwendung des erfindungsgemäß hergestellten formstabilen, dünnwandigen Kunststoffformkörpers abhängig.

Zweckmäßigerweise werden der Unterdruck im ersten Formteil und der Überdruck im zweiten Formteil des Formwerkzeuges aufeinander abgestimmt zeitlich gesteuert erzeugt. Der Unterdruck im ersten Formteil und der Überdruck im zweiten Formteil werden zweckmäßigerweise gleichzeitig erzeugt, wobei der Unterdruck insbesondere zur Entlüftung und der Überdruck zum engen Anlegen des folienförmigen Halbzeuges an die Innenkontur des ersten Formteiles des Formwerkzeuges dient.

Das Erwärmen des folienförmigen Halbzeuges und das Aufbringen der Farbschicht an der Innenkontur des ersten Formteiles des Formwerkzeuges kann zeitlich aufeinanderfolgend oder simultan erfolgen.

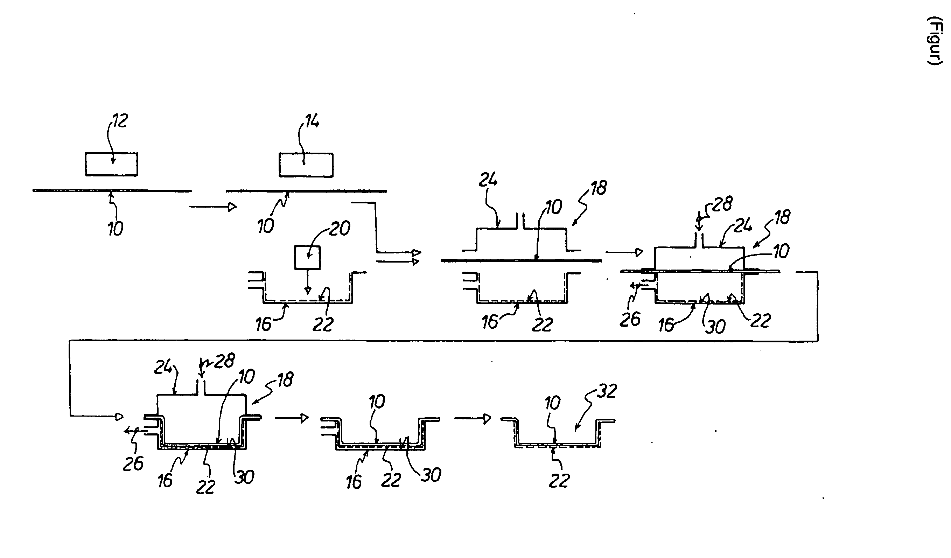

Weitere Einzelheiten, Merkmale und Vorteile ergeben sich aus der nachfolgenden Beschreibung von in der Zeichnung schematisch dargestellter aufeinanderfolgender Verfahrensschritte des Verfahrens zur Herstellung eines formstabilen Kunststoffformkörpers mit einer strukturierten Oberfläche.

Die Figur verdeutlicht ein folienförmiges Halbzeug 10 aus einem thermoplastischen Kunststoff, das in einem ersten Verfahrensschritt mit Hilfe einer Heizeinrichtung 12 auf eine Temperatur unterhalb ihres plastischen Bereiches und anschließend mit Hilfe einer Heizeinrichtung 14 in einem zweiten Schritt auf eine Temperatur über ihren plastischen Bereich erwärmt wird. Anschließend oder gleichzeitig wird in ein erstes Formteil 16 eines Formwerkzeuges 18 mit Hilfe einer Sprüheinrichtung 20 eine Farbschicht 22 eingesprüht. Anschließend wird das über seinen plastischen Bereich erwärmte folienförmige Halbzeug 10 zwischen dem ersten Formteil 16 und einem zweiten Formteil 24 des Formwerkzeuges 18 angeordnet. Das zweite Formteil 24 des Formwerkzeuges 18 wird dann mit dem ersten Formteil 16 abdichtend verbunden, wobei das über seinen plastischen Bereich erwärmte folienförmige Halbzeug 10 zwischen der Unter- und der Oberform 16 und 24 abdichtend festgelegt ist. Danach wird im ersten Formteil 16 ein Unterdruck, was durch den Pfeil 26 angedeutet ist, und im zweiten Formteil 24 ein Überdruck erzeugt, der durch den Pfeil 28 angedeutet ist. Durch den Überdruck 28 wird das über den plastischen Bereich erwärmte folienförmige Halbzeug 10 an die strukturierte Innenkontur 30 der Unterform 16 eng angelegt, wobei sich das folienförmige Halbzeug 10 mit der im ersten Formteil 16 befindlichen Farbschicht 22 fest verbindet.

Der an das erste Formteil 16 angelegte Unterdruck (Pfeil 26) dient dazu, Lufteinschlüsse aus der Farbschicht 22 des ersten Formteiles 16 zu beseitigen, wodurch sich ein Glanzeffekt d.h. ein Kunststoffformkörper mit einer hochwertigen glänzenden Oberfläche erzeugen lässt.

Nach einer Abkühlung und einer Entlüftung des Formwerkzeuges 18 , kann das Formwerkzeug 18 geöffnet werden kann, um den fertigen Kunststoffformkörper 32 aus dem ersten Formteil 16 des Formwerkzeuges 18 entnehmen zu können.

Die Zeichnung verdeutlicht schematisch in einer Blockdarstellung nur ein Aufbringen einer Farbschicht 22 in das erste Formteil 16 des Formwerkzeuges 18. Es ist jedoch auch möglich, die Farbschicht 22 sowohl in das erste Formteil 16 als auch auf das folienförmige Halbzeug 10 aufzubringen.

## Patentansprüche

1. Verfahren zur Herstellung eines dünnwandigen formstabilen Kunststoffkörpers mit einer feinstrukturierten Oberfläche mit den Verfahrensschritten:
a) Erwärmen eines folienförmigen Halbzeugs (10),
b) Einsprühen einer Farbschicht (22) in ein erstes Formteil (16) eines Formwerkzeugs (18),
c) Einbringen des erwärmten folienförmigen Halbzeugs (10) zwischen das erste Formteil (16) und ein zweites Formteil (24) des Formwerkzeugs (18),
d) Schließen des Formwerkzeugs (18), wobei das folienförmige Halbzeug (10) zwischen dem ersten und dem zweiten Formteil (16 und 24) abdichtend festgelegt wird,
e) Erzeugen eines Unterdrucks (26) im ersten Formteil (16), so dass Lufteinschlüsse aus der Farbschicht (22) des ersten Formteils (16) beseitigt werden, und Erzeugen eines Überdrucks (28) im zweiten Formteil (24), so dass das folienförmige Halbzeug (10) an die Innenkontur (30) des ersten Formteils (16) eng angelegt wird, und
f) Abkühlen und Entlüften und Öffnen des Formwerkzeugs (18) und Entnahme des fertigen dünnwandigen formstabilen Kunststoffformkörpers (32).

2. Verfahren nach Anspruch 1,
**dadurch gekennzeichnet,**
**dass** das Erwärmen des folienförmigen Halbzeugs (10) in zwei Schritten erfolgt, wobei im ersten Schritt eine Erwärmung auf eine Temperatur unterhalb des plastischen Bereiches des folienförmigen Halbzeugs (10) und im daran anschließenden zweiten Schritt eine Erwärmung auf eine Temperatur über den plastischen Bereich des folienförmigen Halbzeugs (10) erfolgt.

3. Verfahren nach Anspruch 1 oder 2,
**dadurch gekennzeichnet,**
**dass** als folienförmiges Halbzeug (10) eine PU-Folie oder eine PVC-Folie verwendet wird.

4. Verfahren nach einem der Ansprüche 1 bis 3,
**dadurch gekennzeichnet,**
**dass** ein folienförmiges Halbzeug (10) mit einer Wanddicke zwischen 0,5 und 2 mm, vorzugsweise zwischen 0,8 und 2 mm, verwendet wird.

5. Verfahren nach Anspruch 1,
**dadurch gekennzeichnet,**
**dass** für die Farbschicht (22) ein Einkomponenten-Farbsystem verwendet wird.

6. Verfahren nach Anspruch 1,
**dadurch gekennzeichnet,**
**dass** für die Farbschicht (22) ein Zweikomponenten-Farbsystem verwendet wird.

7. Verfahren nach Anspruch 1,
**dadurch gekennzeichnet,**
**dass** der Unterdruck (26) im ersten Formteil (16) und der Überdruck (28) im zweiten Formteil (24) aufeinander abgestimmt zeitlich gesteuert erzeugt werden.

8. Verfahren nach Anspruch 7,
**dadurch gekennzeichnet,**
**dass** der Unterdruck (26) im ersten Formteil (16) und der Überdruck (28) im zweiten Formteil (24) gleichzeitig erzeugt werden.

## Claims

1. Method for producing a thin-walled, dimensionally stable plastics article having a finely structured surface by means of the following method steps:
a) heating a film-like semi-finished product (10),
b) injecting a coloured layer (22) into a first mould part (16) of a mould (18),
c) introducing the heated, film-like semi-finished product (10) between the first mould part (16) and a second mould part (24) of the mould (18),
d) closing the mould (18), the film-like semi-finished product (10) being sealed between the first and second mould part (16 and 24),
e) generating a vacuum (26) in the first mould part (16) so that trapped air can be eliminated from the coloured layer (22) of the first mould part (16), and generating an overpressure (28) in the second mould part (24) so that the film-like semi-finished product (10) is applied tightly to the inner contour (30) of the first mould part (16), and
f) cooling and deaerating and opening the mould (18) and removing the finished, thin-walled, dimensionally stable plastics article (32).

2. Method according to claim 1, **characterised in that** the film-like semi-finished product (10) is heated in two steps, said film-like semi-finished product (10) being heated to a temperature below the plastic range thereof in the first step and said film-like semi-finished product (10) being heated to a temperature above the plastic range thereof in the subsequent second step.

3. Method according to claim 1 or 2, **characterised in that** a PU film or a PVC film is used as the film-like semi-finished product (10).

4. Method according to one of claims 1 to 3, **characterised in that** a film-like semi-finished product (10) having a wall thickness between 0.5 and 2 mm, preferably between 0.8 and 2 mm, is used.

5. Method according to claim 1, **characterised in that** a one-component colour system is used for the coloured layer (22).

6. Method according to claim 1, **characterised in that** a two-component colour system is used for the coloured layer (22).

7. Method according to claim 1, **characterised in that** the vacuum (26) in the first mould part (16) and the overpressure (28) in the second mould part (24) are generated in a coordinated and time-controlled manner.

8. Method according to claim 7, **characterised in that** the vacuum (26) in the first mould part (16) and the overpressure (28) in the second mould part (24) are generated simultaneously.

## Revendications

1. Procédé de production d'un corps de forme stable à parois minces en plastique, à la superficie finement structurée, comportant les étapes suivantes:
a) le réchauffement d'un produit semi-fini en forme de feuille (10),
b) la pulvérisation d'une couche de peinture (22) dans la première pièce préformée (10) d'un outil de formage (18),
c) l'amenée du produit semi-fini en forme de feuille réchauffé (10) entre la première pièce préformée (16) et une seconde pièce préformée (24) de l'outil de formage (18),
d) la fermeture de l'outil de formage (18), le produit semi-fini en forme de feuille (10) étant fixé de manière étanchéifiante entre la première et la seconde pièce préformée (16 et 24),
e) la production d'une dépression (26) dans la première pièce préformée (16) de manière à éliminer les bulles d'air de la couche de peinture (22) de la première pièce préformée (16) et la production d'une surpression (28) dans la seconde pièce préformée (24) de manière à poser le produit semi-fini en forme de feuille (10) bien à plat sur le contour interne (30) de la première pièce préformée (16) et
f) le refroidissement, l'aération et l'ouverture de l'outil de formage (18) et le retrait du corps en plastique de forme stable, à parois minces, fini (32).

2. Procédé selon la revendication 1, **caractérisé en ce que** le réchauffement du produit semi-fini en forme de feuille (10) se fait en deux étapes. Dans une première étape, il se produit un réchauffement à une température située en dessous de la phase plastique du produit semi-fini en forme de feuille (10) et, dans l'étape suivante, il se produit un réchauffement à une température située au-dessus de la phase plastique du produit semi-fini en forme de feuille (10).

3. Procédé selon la revendication 1 ou 2, **caractérisé en ce qu'**on utilise, comme produit semi-fini en forme de feuille (10), un film en polyuréthane ou un film en PVC.

4. Procédé selon l'une quelconque des revendications 1 à 3, **caractérisé en ce qu'**on utilise un produit semi-fini en forme de feuille (10) avec une épaisseur de paroi comprise entre 0,5 et 2 mm, de préférence entre 0,8 et 2 mm.

5. Procédé selon la revendication 1, **caractérisé en ce qu'**on utilise un système de couleur à composante unique pour la couche de peinture (22).

6. Procédé selon la revendication 1, **caractérisé en ce qu'**on utilise un système de couleur à deux composantes pour la couche de peinture (22).

7. Procédé selon la revendication 1, **caractérisé en ce que** la dépression (26) est produite dans la première pièce préformée (16) et la surpression (28) dans la seconde pièce préformée (24) au moyen d'une commande pour qu'elles soient synchronisées dans le temps.

8. Procédé selon la revendication 7, **caractérisé en ce que** la dépression (26) et la surpression (28) sont produites de manière simultanée dans la première pièce préformée (16) et dans la seconde pièce préformée (24), respectivement.
